Europäisches Patentamt

European Patent Office

Office européen des brevets

(19)

(11) Veröffentlichungsnummer : **0 133 981**
**B1**

# (12) EUROPÄISCHE PATENTSCHRIFT

(45) Veröffentlichungstag der Patentschrift :
11.11.87

(21) Anmeldenummer : 84109009.5

(22) Anmeldetag : 30.07.84

(51) Int. Cl.⁴ : **B 25 J 19/06, B 25 J 19/02**

(54) **Mechanische Überlastungssicherung.**

(30) Priorität : 05.08.83 DE 3328412

(43) Veröffentlichungstag der Anmeldung :
13.03.85 Patentblatt 85/11

(45) Bekanntmachung des Hinweises auf die Patenterteilung : 11.11.87 Patentblatt 87/46

(84) Benannte Vertragsstaaten :
DE FR GB IT SE

(56) Entgegenhaltungen :
DE-A- 3 004 014
DE-B- 1 057 834
DE-B- 2 233 130
US-A- 3 727 432

(73) Patentinhaber : **Siemens Aktiengesellschaft Berlin
und München
Wittelsbacherplatz 2
D-8000 München 2 (DE)**

(72) Erfinder : **Bommer, Heinz
Steigstrasse 19
D-7507 Pfinztal (DE)**
Erfinder : **Fritz, Harald, Dipl.-Ing.
Hebelstrasse 5
D-7517 Waldbronn 3 (DE)**

Jouve, 18, rue St-Denis, 75001 Paris, France

EP 0 133 981 B1

**Beschreibung**

Die Erfindung betrifft eine mechanische Überlastsicherung gemäß Oberbegriff des Anspruchs 1.

Es ist bereits aus der DE-B-1 057 834 eine Überlastsicherung dieser Art bekannt, bei der mit einer unter einem Anpreßdruck stehenden Kugel eine Rastverbindung zwischen zwei insbesondere drehmomentübertragenden Teilen hergestellt wird. Hier handelt es sich lediglich um die Verbindung einer Welle mit einem anderen Antriebsteil, die eine einfache Führung und Halterung der Kugel aufweist, da nur Drehmomente oder eine Kraft in Achsrichtung die Überlastsicherung beanspruchen kann.

Soll beispielsweise eine mit Sensoren ausgestattete Greifhand eines Roboters gegen die Einwirkung von Kollisionen mit der Umgebung oder mit einem zu bewegenden Werkstück geschützt werden, so müssen heftige Berührungen der Greifhand bei Bewegungen des Roboterarmes in beliebiger Richtung eine Schnellabschaltung der Antriebsmotoren des Roboters auslösen und den Arm stillsetzen.

Die Verbindung zwischen einem Arm des Roboters und seiner Greifhand muß jedoch, um genaue Positionierungen vornehmen zu können, sehr steif ausgebildet sein. Wegen dieser geforderten steifen Verbindung können bei Kollisionen die Berührungskräfte sehr schnell ansteigen, wobei unter Umständen die Greifhand trotz einer Schnellabschaltung beschädigt wird.

Es wäre denkbar, mit einer leicht austauschbaren Sollbruchstelle im Roboterarm das angesprochene Problem zu lösen. Mit einer Auffangvorrichtung und einem Schalter kombiniert könnte an der Sollbruchstelle das Vorderteil des Greifarmes bei Kollisionen freigegeben und über einen Kontakt die Schnellabschaltung betätigt werden.

Ein Nachteil einer Sollbruchstelle ist, daß sie nach jeder Kollision ausgewechselt werden muß. Weiter ist es schwierig, die Sollbruchstelle so auszubilden, daß die Auslösekraft gut reproduzierbar wird. Normalerweise ist eine Sollbruchstelle eine Schwächung in einer kraftübertragenden Anordnung und kann deshalb nicht so steif sein, wie der Rest der Anordnung. Schließlich werden für verschieden hohe Auslösekräfte unterschiedliche Bruchsicherungen benötigt.

Der Erfindung lag die Aufgabe zugrunde, eine eingangs erwähnte mechanische Überlastsicherung zu schaffen, die für eine Vielzahl von Kräften und Momenten ausgelegt ist und die nach einer Kollision durch einfaches Einrenken ohne weiteres Demontieren wieder betriebsbereit gemacht werden kann. Sie soll mindestens so steif wie der übrige Teil der Kraftübertragung sein, und ihre Auslösekraft soll in vernünftigen Grenzen reproduzierbar sein.

Die Lösung dieser Aufgabe wird gemäß der Erfindung bei einer eingangs genannten mechanischen Überlastungssicherung durch die kennzeichnenden Merkmale des Anspruchs 1 erreicht.

Die Auslösekraft einer federbelasteten Rastverbindung kann so genau dosiert werden, daß keine Abstriche an einer Mindeststeifigkeit der Kraftübertragung notwendig sind. Eine Rastverbindung kann auch nach Auslösung ohne Demontage wieder in ihre eingerastete Lage zurückgebracht werden.

Zweckmäßig ist die Kraft der Schraubenfeder, mit welcher der Kegelstumpf gegen die inneren Enden der Kugelbolzen drückt, einstellbar.

Der Kegelstumpf ist vorteilhafterweise mit einem Kolben verbunden, der bei einer durch das Ausrasten der Kugelbolzen verursachten Axialbewegung des Kegelstumpfes einen in die Rastscheibe eingebauten Ausschalter auslöst.

Um die Ausrastbewegung zu begrenzen, ist ein zylindrischer Mittelteil der Rasttrommel beidseitig durch kegelstumpfförmige Ansätze abgeschlossen. Ein Ausrasten, das durch eine reine Verdrehung der beiden Flansche gegeneinander erfolgt, wird durch eine Ausnehmung in der Rastscheibe, die eine Nase in der Rasttrommel umfaßt, begrenzt.

Zweckmäßig sind drei Kugelbolzen in der Rastscheibenebene vorgesehen, die jeweils um 120° gegeneinander versetzt angeordnet sind.

Zur Reibungsverminderung sind auch an den inneren Enden der Kugelbolzen Kugeln angeordnet.

Die Erfindung wird an einer Zeichnung mit zwei Figuren erläutert.

Figur 1 stellt einen Längsschnitt durch ein Ausführungsbeispiel der Erfindung dar.

Figur 2 ist eine Aufsicht auf das gleiche Ausführungsbeispiel mit der Angabe von Schnittlinien, in die der in Figur 1 dargestellte Längsschnitt gelegt ist.

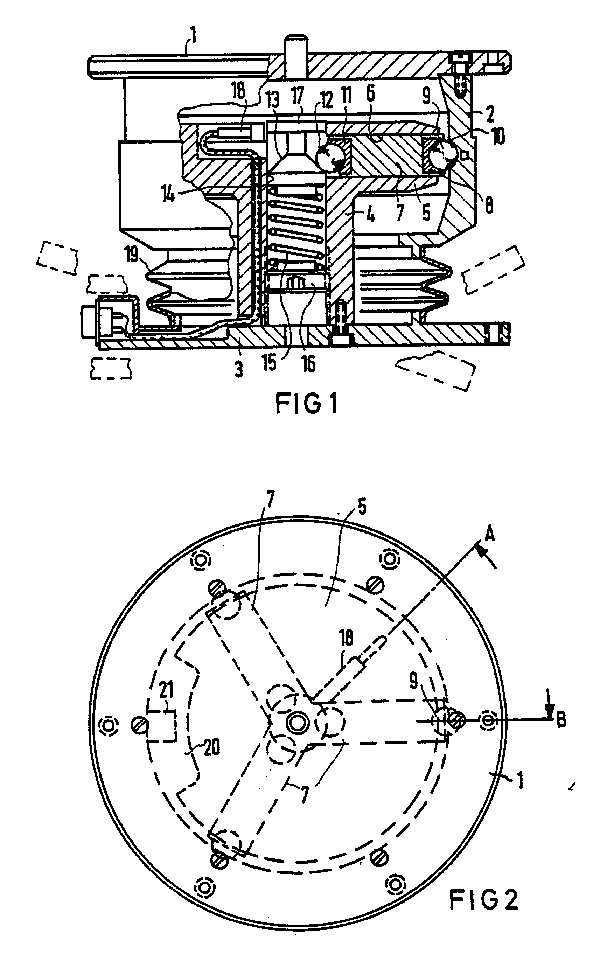

In der Figur 1 ist ein Flansch 1 mit einer Rasttrommel 2 verbunden. Ein zweiter Flansch 3 ist mit einer Nabe 4 verbunden, die einen integralen Bestandteil einer Rastscheibe 5 bildet. Eine radiale Bohrung 6 in der Rastscheibe 5, von denen nach der Aufsicht der Figur 2 insgesamt drei vorgesehen sind, nimmt einen Kugelbolzen 7 auf. An seinem rechten Ende enthält der Kugelbolzen 7 eine Kugelfassung 8, in dieser läuft eine Kugel 9. Die Kugel 9 ist in eine Rastvertiefung 10 in einem mittleren zylindrischen Wandteil der Rasttrommel 2 eingerastet. In einer zweiten Kugelfassung 11 am inneren Ende des Kugelbolzens 7 ist eine Kugel 12 gelagert. Die Kugel 12 liegt auf der Mantelfläche eines Kegelstumpfes 13 auf, der in einer zentralen Bohrung 14 der Nabe 4 gleiten kann. Auf seiner Unterseite ist der Kegelstumpf 13 durch eine Schraubenfeder 15 belastet. Die Federkraft der Schraubenfeder 15 kann durch eine Schraube 16 verändert werden. Die Schraubenfeder 15 drückt über den Kegelstumpf 13 die Kugelbolzen 7 nach außen und liefert somit die Rastkraft für die in die Rasttrommelwand eingerasteten Kugeln 9. An einem zylindrischen Fortsatz des Kegelstumpfes 13 ist ein Kolben 17 angebracht, der bei einer axialen Bewegung des Kegelstumpfes 13 einen berührungslosen induktiven Schalter 18 betätigt. Der untere Flansch 3 und die Rasttrommel 2 sind durch einen Balg 19 miteinander verbunden, der verhindert, daß Schmutz in die Überlastungssicherung eindringen kann.

Wird durch eine zwischen den Flanschen 1 und 3 auftretende Kraft oder ein Drehmoment die Rastkraft der äußeren Kugeln 9 in den Vertiefungen 10 des zylindrischen Wandteils der Rasttrommel 2 übertroffen, so rastet die Rastscheibe 5 aus. Dabei werden die Kugelbolzen 7 nach innen gedrückt und bewirken, daß der Kegelstumpf 13 gegen die Kraft der Schraubenfeder 15 nach unten wandert. Der mit dem Kegelstumpf 13 verbundene Kolben 17 gelangt vor den berührungslosen Schalter 18 und stellt die Antriebsmaschinen, die die Überlast verursachen, ab. Die an den zylindrischen Mittelteil der Rasttrommel 2 oben und unten anschließenden kegelstumpfförmigen Teile dienen als Begrenzung für eine Kippbewegung und eine rein axiale Bewegung der beiden Flansche 1 und 3 gegeneinander. End- und Zwischenstellungen des unteren Flansches 3 gegenüber dem oberen Flansch 1 sind strichpunktiert eingezeichnet, wobei die Schrägstellungen auf Kippbewegungen und die waagrechten Stellungen auf axiale Bewegungen zurückzuführen sind.

In der Aufsicht nach Figur 2 sind Schnittlinien A und B eingezeichnet, in denen der Längsschnitt nach Figur 1 geführt ist. In der Figur 2 sind auch die drei Kugelbolzen 7 in der Rastscheibe 5 zu erkennen sowie der berührungslose Schalter 18. Die Kugelbolzen 7 sind radial unter gegenseitigen Abstandswinkeln von 120° angeordnet. Die Rastscheibe trägt eine Ausnehmung 20, in die eine an der Rasttrommel angebrachte Nase 21 hineinragt. Die beiden Teile bilden zusammen einen Anschlag für Ausrastbewegungen, die durch eine gegenseitige Torsion der beiden Flansche 1 und 3 hervorgerufen werden.

**Patentansprüche**

1. Mechanische Überlastsicherung zwischen zwei kraft- und momenteübertragenden Teilen mit

einem an einem ersten Teil (3) befestigten Rastelement (5) mit mindestens einer Kugel (9), die unter der Kraft einer in einer hohlen Nabe (4) des ersten Teils (3) geführten Schraubenfeder (15) über einen Kegelstumpf (13) in Vertiefungen (10) des anderen Teils (1) einrastet, dadurch gekennzeichnet, daß

an dem als Flansch (3) ausgebildeten ersten Teil das als Rastscheibe (5) ausgeführte Rastelement befestigt ist, die in radialen Bohrungen (6) geführte Kugelbolzen (7) aufweist und

daß die an äußersten Enden der Kugelbolzen (7) gelagerten Kugeln (9) über den unter der Kraft der Schraubenfeder (15) stehenden Kegelstumpf (13) in die Vertiefungen (10) der Innenwand einer mit dem als weiteren Flansch (1) ausgeführten anderen Teils fest verbundenen Rasttrommel (2) einrastet.

2. Mechanische Überlastungssicherung nach Anspruch 1, dadurch gekennzeichnet, daß die Kraft der Schraubenfeder (15) einstellbar ist.

3. Mechanische Überlastungssicherung nach Anspruch 1 oder 2, dadurch gekennzeichnet, daß ein Kolben (17) mit dem Kegelstumpf (13) verbunden ist, der bei einer axialen Bewegung einen in die Rastscheibe (5) eingebauten Ausschalter (18) auslöst.

4. Mechanische Überlastungssicherung nach Anspruch 1 oder einem der vorhergehenden Ansprüche, dadurch gekennzeichnet, daß zur Begrenzung der Ausrastbewegungen an einem zylindrischen Mittelteil der Rasttrommel (2) auf beiden Seiten kegelstumpfförmige Trommelteile angefügt sind und eine Ausnehmung (20) in der Rastscheibe (5) mit beidseitigen Abständen eine Nase (21) in der Trommel (2) umfaßt.

5. Mechanische Überlastungssicherung nach Anspruch 1 oder einem der vorhergehenden Ansprüche, dadurch gekennzeichnet, daß drei Kugelbolzen (7) in der Rastscheibenebene jeweils um 120° gegeneinander versetzt angeordnet sind.

6. Mechanische Überlastungssicherung nach Anspruch 1 oder einem der vorhergehenden Ansprüche, dadurch gekennzeichnet, daß auch an den inneren Enden der Kugelbolzen (7) Kugeln (12) gehalten sind.

**Claims**

1. A mechanical overload safety device between two force- and moment transmitting components comprising

a locking element (5) which is attached to a first component (3) and which includes at least one ball (9) which, under the force of a helical spring (15), mounted in a hollow hub (4) of the first component (3), engages via a conical frustum (13) into recesses (10) in the other component (1) characterised in that

the first component, which consists of a flange (3) is attached to the locking element which consists of a locking disc (5) and which is provided with ball pins (7) which extend in radial bores (6) and

that the balls (9), which are mounted at the outermost ends of the ball pins (7), engage via the conical frustum (13), which is subject to the force of the helical spring (15), into the recesses (10) in the inner wall of a locking drum (2) which is permanently connected to the other component which consists of a further flange (1).

2. A mechanical overload safety device as claimed in claim 1, characterised in that the force of the helical spring (15) is adjustable.

3. A mechanical overload safety device as claimed in claim 1 or claim 2, characterised in that a piston (17) is connected to the conical frustum (13) and, in the case of an axial movement, triggers a disconnecting switch (18) which is incorporated into the locking disc (5).

4. A mechanical overload safety device as claimed in claim 1 or one of the preceding claims, characterised in that in order to limit the disengaging movements, conical frustum-shaped drum portions are attached to both sides of a cylindrical central component of the locking drum (2), and a recess (20) in the locking disc (5) encompasses a projection (21) in the drum (2) with clearances on both sides.

5. A mechanical overload safety device as claimed in claim 1 or one of the preceding claims, characterised in that three ball pins (7) are arranged in the locking disc plane, each offset by 120° in relation to one another.

6. A mechanical overload safety device as claimed in claim 1 or one of the preceding claims, characterised in that balls (12) are also mounted at the inner ends of the ball pins (7).

**Revendications**

1. Dispositif mécanique de sécurité contre les surcharges entre deux pièces à transmission de forces ou de couples, comportant

un élément d'encliquetage (5) fixé à la première pièce (3), pourvu d'au moins une bille (9) qui pénètre dans des cavités (10) de l'autre pièce (1), sous l'effet de la force d'un ressort hélicoïdal (15) guidé dans le moyeu creux (4) de la première pièce (3), et par l'intermédiaire d'un tronc de cône (13),

caractérisé par le fait

qu'à la première pièce réalisée sous la forme d'un flasque (3) est fixé l'élément d'encliquetage réalisé sous la forme d'un disque à encliquetage (5) qui comporte des chevilles à billes (7) guidées dans des perçages radiaux (6), et

que les billes (9) qui sont dans les extrémités extérieures des chevilles à billes (7) s'encliquè-

tent, par l'intermédiaire du tronc de cône (13) qui est soumis à la force du ressort hélicoïdal (15), dans les cavités (10) de la paroi intérieure d'un tambour d'encliquetage (2) qui est relié rigidement à la seconde pièce réalisée sous la forme d'un second flasque (1).

2. Dispositif mécanique de sécurité contre les surcharges selon la revendication 1, caractérisé par le fait que la force du ressort hélicoïdal (15) est réglable.

3. Dispositif mécanique de sécurité contre les surcharges selon la revendication 1 ou 2, caractérisé par le fait qu'un piston (17) est relié au tronc de cône (13) qui déclenche, lors d'un mouvement axial, un interrupteur (18) qui est monté dans le disque à encliquetage (5).

4. Dispositif mécanique de sécurité contre les surcharges selon la revendication 1 ou selon l'une des revendications précédentes, caractérisé par le fait que pour limiter les mouvements de désencliquetage on a rajouté, pour limiter les mouvements de désencliquetage, à une partie cylindrique médiane du tambour d'encliquetage (2) et sur les deux côtés, des éléments de tambour en forme de troncs de cônes et qu'une ouverture (20) ménagée dans le disque d'encliquetage (5) comporte, avec des distances bilatérales, un bec (21) dans le tambour (2).

5. Dispositif mécanique de sécurité contre les surcharges selon la revendication 1 ou selon l'une des revendications précédentes, caractérisé par le fait que trois chevilles à billes (7) sont disposées dans le plan du disque à encliquetage, avec un décalage mutuel de 120°.

6. Dispositif mécanique de sécurité contre les surcharges selon la revendication 1 ou selon l'une des revendications précédentes, caractérisé par le fait que les billes (12) sont également maintenues dans les extrémités intérieures des chevilles à billes (7).

**FIG 1**

**FIG 2**